# EUROPEAN PATENT APPLICATION

(11) **EP 2 302 257 A2**
(43) Date of publication of application: **30.03.2011**
(21) Application number: 10009530.6
(22) Date of filing: 14.09.2010
(51) Int. Cl.: F16H 1/28, F16H 57/08, F03D 11/02, F16H 37/04

(54) **Planetary gear unit for a gearbox for a wind turbine, gearbox for a wind turbine and wind turbine**

(30) Priority: 28.09.2009 GB 0917018
(71) Applicant: HANSEN TRANSMISSIONS INTERNATIONAL, naamloze vennootschap, 2650 Edegem (BE)
(72) Inventor: Leimann, Dirk, 2650 Edegem (BE)
(74) Representative: Donné, Eddy

(57) **Abstract**

The present invention provides a planetary gear unit (20) for a gearbox (40) for a wind turbine. The planetary gear unit (20) comprises a housing (21) and a planet carrier (22) provided with planet shafts (23) distributed uniformly around a planet carrier's axis for rotatably supporting planet gears (24) which are mounted between a sun gear (26) and a ring gear (27) for mutual interaction and which are supported by rolling bearings (25). The planet carrier (22) is rotatably mounted in the housing (21) by means of sliding bearings (28).

## Description

### Technical field of the invention

The present invention relates to a planetary gear unit for a gearbox for a wind turbine. The present invention furthermore relates to a gearbox comprising such planetary gear unit and to a wind turbine comprising such a gearbox.

### Background of the invention

As wind energy business becomes more and more important, gearbox concepts are thoroughly studied nowadays. Known concepts of gearboxes for wind turbines may comprise at least one planetary gear unit and a parallel gear unit for connecting the planetary gear unit to the generator of the wind turbine.

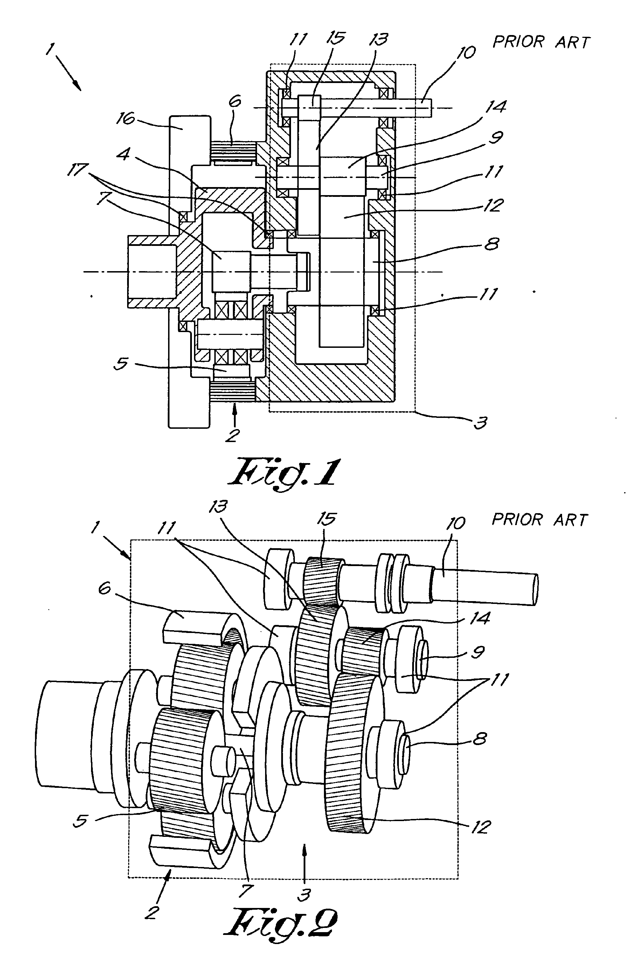

Fig. 1 and Fig. 2 schematically illustrate one type of gearbox 1 for a wind turbine according to the prior art. In this example, the gearbox 1 comprises one planetary gear unit 2 and a two-stage parallel gear unit 3. The planetary gear unit 2 comprises a planet carrier 4 which supports a plurality of planet gears 5. The planetary gear unit 2 furthermore comprises a ring gear 6 and a sun gear 7. In the example given in Fig. 1 and Fig. 2 the two-stage parallel gear unit 3 comprises a low speed shaft 8, an intermediate shaft 9 and a high speed shaft 10, which are all parallel to each other and which are each rotatably supported by bearings 11. The parallel gear unit 3 furthermore comprises two gears 12, 13. The gears 12, 13 respectively mesh with pinion 14 on the intermediate shaft 9 and pinion 15 on the high speed shaft 10.

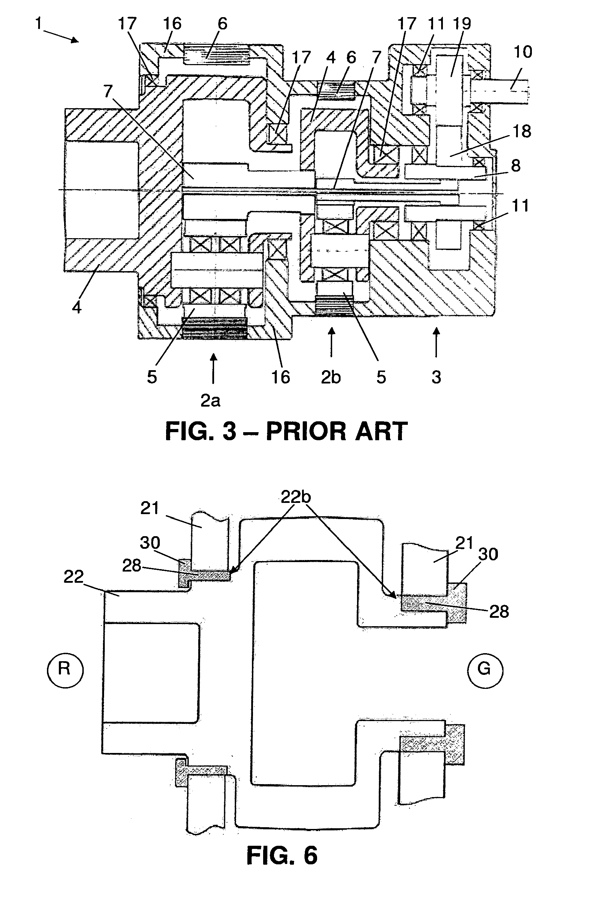

According to other known concepts, gearboxes 1 for wind turbines may comprise two planetary gear units 2 and a one-stage parallel gear unit 3. This is illustrated in Fig. 3. In the example given in Fig. 3, the gearbox 1 comprises a first planetary gear unit 2a, a second planetary gear unit 2b and a one-stage parallel gear unit 3. Each of the planetary gear units 2a, 2b comprises a planet carrier 4 which supports a plurality of planet gears 5, a ring gear 6 and a sun gear 7. The parallel gear unit 3 of the present example differs from the example shown in Fig. 1 and Fig. 2 in that it only comprises a low speed shaft 8 and a high speed shaft 10, and no intermediate shaft 9. The low speed shaft 8 and the high speed shaft 10 are rotatably supported by bearings 11. In this example, the parallel gear unit 3 comprises one gear 16 which is carried on the low speed shaft 8 and the high speed shaft 10 and which meshes with pinion 17 on the high speed shaft 10.

In the above described concepts of Fig. 1 to Fig. 3, the planet carrier 4 in the planetary gear unit 2 is rotatably mounted in a housing structure 18 by means of roller bearings 19.

For multi-megawatt wind turbines, available roller bearings for use in planetary gear units of a gearbox may provide high cost requirements to the manufacturing process of the planetary gear unit because, as a consequence of growing needs for multi-megawatt turbines, sizes of planetary gear unit components keeps increasing. Another aspect is that speed and load can exceed design limits of rolling bearing solutions. In case of planetary carrier bearings, these design limits could originate from failure modes such as, for example, slip, wear or mixed friction. The larger rolling bearings, which are now used for supporting planet carriers in planetary gear units, become, the higher their cost becomes and thus the higher the costs for manufacturing the planetary gear unit are.

In case of exceeding rolling bearing limits, one solution could be to replace rolling bearings in the planetary gear unit by existing sliding bearings. Unfortunately there are no standard bearings available in sizes and designs required for gearboxes for multi-megawatt wind turbines. Suitable bearings for such applications require high sizes so as to be able to withstand high loads generated during operation of the wind turbine. Up till now, for big bearings for use in gearboxes for wind turbines, it is common to use sliding bearings with a core from steel and a surface from sliding bearing material. However, such big sliding bearings are very expensive and thus consequently increase costs for manufacturing planetary gear units.

### Summary of the invention

It is an object of embodiments of the present invention to provide a planetary gear unit for a gearbox in a wind turbine, a gearbox comprising such planetary gear unit and a wind turbine comprising such a gearbox.

The above objective is accomplished by a method and device according to embodiments of the present invention.

In a first aspect, the present invention provides a planetary gear unit for a gearbox for a wind turbine. The planetary gear unit comprises a housing and a planet carrier provided with a plurality of planet shafts distributed uniformly around a planet carrier's axis for rotatably supporting planet gears which are mounted between a sun gear and a ring gear for mutual interaction and which are supported by rolling bearings. The planet carrier is rotatably mounted in the housing by means of sliding bearings.

It has to be understood that, as known by a person skilled in the art, sliding bearings may also be referred to as friction bearings, slide bearings, plain bearings or journal bearings.

The rolling bearings for supporting the planet gears may be any kind of rolling bearings as known by a person skilled in the art, such as for example but not limited to taper roller bearings, cylindrical roller bearings, spherical roller bearings or CARB toroidal roller bearings.

According to embodiments of the invention, the sliding bearings are formed of one single sliding bearing material. This is different from classical, existing sliding bearings which are currently used when big bearings are needed because of high load and speed requirements of the wind turbine and which are formed of a basic design formed out of steel that is provided with a sliding bearing material and which furthermore comprises finishing materials. Some examples of material combinations of currently used sliding bearings are steel/bronze, steel/cast bronze alloys, steel/sintered bronze alloys, steel/aluminium-tin alloys, steel/copper-tin alloys, steel/bearing metal, steel/lead-bronze/electroplated layer. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways. Further, the sliding bearing raceway design is according to the needs known by a person skilled in the art and taking into account the requirements regarding loads and speed.

Hence, the present invention provides a planetary gear unit comprising a combination of rolling bearings and sliding bearings in a same unit. By using sliding bearings which are different from sliding bearings currently used as planet carrier bearings in combination with rolling bearings at other locations in the planetary gear unit, manufacturing costs of a planetary gear unit according to embodiments of the invention can be significantly decreased.

The sliding bearings and the planet carrier have raceways for contacting each other and according to embodiments of the invention the raceways of the planet carrier may be hardened. According to embodiments of the invention, the raceways of the planet carrier may be hardened using any process known by a person skilled in the art, such as for example case hardening. The raceways of the sliding bearings and the raceways of the planet carrier may be separated by lubricant, or in other words, a lubricant may be provided in between the raceways of the slicing bearings and the raceways of the planet carrier.

According to other embodiments of the invention, the raceways of the planet carrier may also not be hardened and may, in that case, comprise a hardened ring.

The planetary gear unit may, according to embodiments of the invention, comprise a radial fixation mechanism at a rotor side of the planetary gear unit and/or at a generator side of the planetary gear unit for preventing the sliding bearings from rotating during operation of the planetary gear unit. The locking mechanism may be formed by an additional part different from the sliding bearing such as, for example, by a pin.

According to further embodiments, the planetary gear unit may furthermore comprise an axial fixation mechanism. The axial fixation mechanism is for preventing axial movement of the sliding bearings of the planetary gear unit during operation of the planetary gear unit and may also be referred to as locking bearing arrangement. According to embodiments of the invention, the axial fixation mechanism may be formed as an integral part of the sliding bearings. According to other embodiments of the invention, the axial fixation mechanism may be formed as an additional part different from the sliding bearings, such as for example by a cover provided between the housing and the planet carrier. The axial fixation mechanism may be provided at a rotor side of the planetary gear unit and/or at a generator side of the planetary gear unit.

The planetary gear unit may furthermore comprise a seal, such as for example a sealing ring. According to embodiments of the invention, the seal may be provided in between the planet carrier and the cover. According to other embodiments of the invention, the seal may be provided in between the planet carrier and the sliding bearing.

According to still further embodiments of the invention, the sliding bearings and the housing may be formed of a same material and in one part.

In a second aspect, the present invention provides a gearbox for a wind turbine. The gearbox comprises at least one planetary gear unit and a parallel gear unit. The planetary gear unit comprises a housing and a planet carrier provided with planet shafts distributed uniformly around a planet carrier's axis for rotatably supporting planet gears which are mounted between a sun gear and a ring gear for mutual interaction and which are supported by rolling bearings, and wherein the planet carrier is rotatably mounted in the housing by means of sliding bearings.

The sliding bearings may be formed of one single sliding bearing material. This is different from classical, existing sliding bearings which are currently used when big bearings are needed because of high load and speed requirements of the wind turbine and which are formed of a basic design formed out of steel that is provided with a sliding bearing material and which furthermore comprises finishing materials. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways.

The rolling bearings for supporting the planet gears may be any kind of rolling bearings as known by a person skilled in the art, such as for example but not limited to taper roller bearings, cylindrical roller bearings, spherical roller bearings or CARB toroidal roller bearings.

In still a further aspect, the present invention provides a wind turbine comprising a gearbox according to embodiments of the present invention. According to embodiments of the invention, the wind turbine may be a multi-megawatt wind turbine. With multi-megawatt wind turbine is meant a wind turbine which is able to generate more than 1 megawatt of electricity.

The wind turbine comprises a gearbox comprising at least one planetary gear unit and a parallel gear unit, the planetary gear unit comprising a housing and a planet carrier provided with planet shafts distributed uniformly around a planet carrier's axis for rotatably supporting planet gears which are mounted between a sun gear and a ring gear for mutual interaction and which are supported by rolling bearings, and wherein the planet carrier is rotatably mounted in the housing by means of sliding bearings.

The sliding bearings may be formed of one single sliding bearing material. This is different from classical, existing sliding bearings which are currently used when big bearings are needed because of high load and speed requirements of the wind turbine and which are formed of a basic design formed out of steel that is provided with a sliding bearing material and which furthermore comprises finishing materials. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways.

The rolling bearings for supporting the planet gears may be any kind of rolling bearings as known by a person skilled in the art, such as for example but not limited to taper roller bearings, cylindrical roller bearings, spherical roller bearings or CARB toroidal roller bearings.

According to embodiments of the invention, the wind turbine may be of the kind whereby a rotor shaft of the wind turbine is bearing-mounted with two bearings which are fixed directly to the nacelle of the wind turbine. According to other embodiments of the invention, the wind turbine may be of the kind whereby one of the bearings of the planet carrier of the planetary gear unit also serves to support the rotor shaft of the wind turbine.

The above and other characteristics, features and advantages of the present invention will become apparent from the following detailed description, taken in conjunction with the accompanying drawings, which illustrate, by way of example, the principles of the invention.

### Brief description of the drawings

Fig. 1 to Fig. 3 illustrate gearbox concepts according to the prior art.
Fig. 4 illustrates a planetary gear unit according to embodiments of the invention.
Fig. 5 to Fig. 9 illustrate part of a planetary gear unit according to different embodiments of the invention.

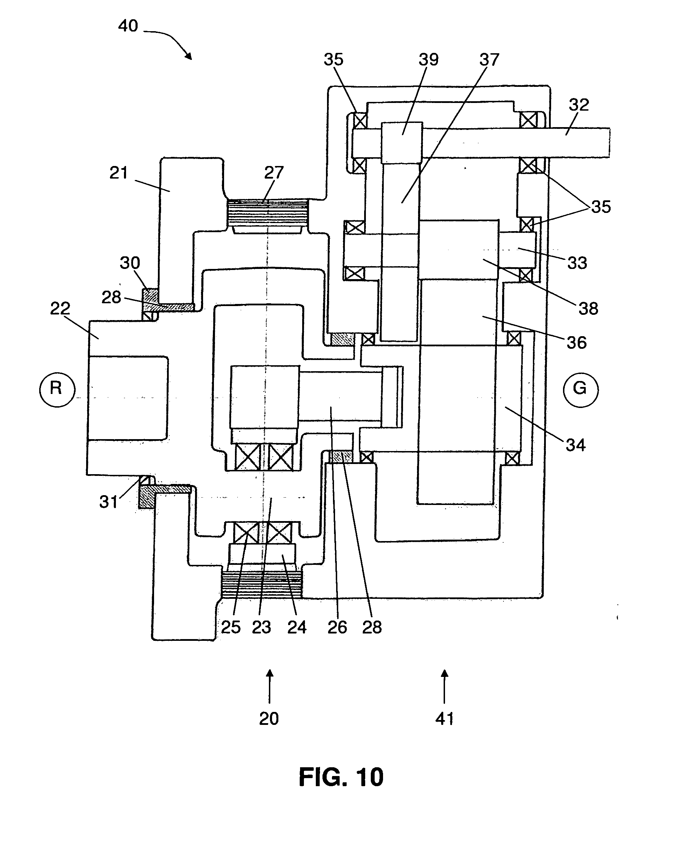

Fig. 10 illustrates a gearbox comprising a planetary gear unit according to an embodiment of the present invention.

Same reference signs in the different figures refer to same or analogous elements.

### Description of illustrative embodiments

The present invention will be described with respect to particular embodiments and with reference to certain non-limiting drawings. It has to be understood that the invention is not limited thereto but is only limited by the claims. For illustrative purposes, the size of some of the elements in the drawings may be exaggerated and not drawn on scale.

Terms such as "comprising" and "coupled" are not to be interpreted as limiting the invention in any way. The term "comprising", used in the claims, should not be interpreted as being restricted to the means listed thereafter; it does not exclude other elements or steps. Similarly, it is to be noticed that the term "coupled", also used in the claims, should not be interpreted as being restricted to direct connections only.

While some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Hereinafter, the present invention will be described by means of different embodiments. It has to be understood that these embodiments are only for the ease of understanding the invention and are not intended to limit the invention in any way.

The present invention provides a planetary gear unit for a gearbox for a wind turbine, a gearbox comprising such a planetary gear unit and a wind turbine comprising such a gearbox. More particularly, the present invention may provide a planetary gear unit for a gearbox for a multi-megawatt wind turbine.

For multi-megawatt wind turbines, available roller bearings for use in planetary gear units of a gearbox may provide high cost requirements to the manufacturing process of the planetary gear unit because, as a consequence of growing needs for multi-megawatt turbines, sizes of planetary gear unit components keeps increasing. The larger roller bearings, which are now used for supporting planet carriers in planetary gear units, become, the higher their cost becomes and thus the higher the costs for manufacturing the planetary gear unit are.

In one aspect, the present invention provides a planetary gear unit for a gearbox for a wind turbine. According to embodiments of the invention, the wind turbine may be a multi-megawatt wind turbine. With multi-megawatt wind turbine is meant a wind turbine which is able to generate more than 1 megawatt of electricity.

The planetary gear unit comprises a housing and a planet carrier provided with planet shafts distributed uniformly around a planet carrier's axis for rotatably supporting planet gears which are mounted between a sun gear and a ring gear for mutual interaction and which are supported by rolling bearings. The planet carrier is rotatably mounted in the housing by means of sliding bearings.

It has to be understood that, as known by a person skilled in the art, sliding bearings may also be referred to as friction bearings, slide bearings, plain bearings or journal bearings. The sliding bearings may be formed of one single sliding bearing material, which is different from existing sliding bearings which are currently used when big bearings are needed because of high load and speed requirements of the wind turbine.

The present invention thus provides a planetary gear unit comprising a combination of rolling bearings and sliding bearings. By using sliding bearings which are different from sliding bearings currently used as planet carrier bearings in combination with rolling bearings at other locations in the planetary gear unit, manufacturing costs of a planetary gear unit according to embodiments of the invention can be significantly decreased. This is a big advantage nowadays as megawatt requirements for wind turbines, and consequently sizes of parts of, amongst others, the planetary gear unit of the wind turbine, are continuously increasing.

The invention will be described by means of different drawings. It is known by a person skilled in the art that a gearbox has a rotor side R (for being connected to the rotor hub of the wind turbine) and a generator side G (for being connected to the generator of the wind turbine). In the following description the rotor side and generator side will be used to indicate locations of different parts in the planetary gear unit. When referring to locations in the planetary gear unit at rotor side is meant locations before locations of the planet gears. When referring to locations in the planetary gear unit at generator side is meant locations after location of the planet gears.

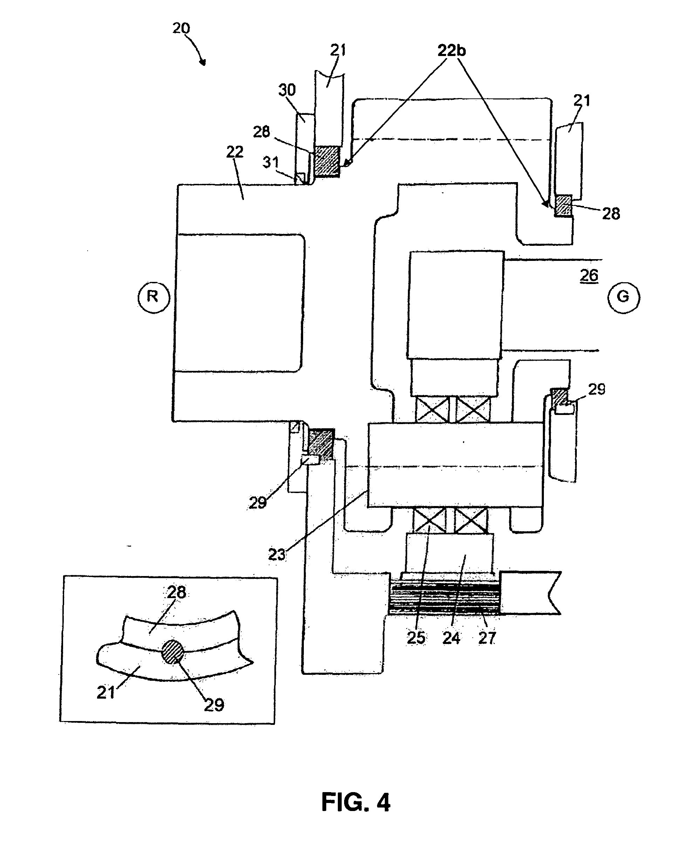

Fig. 4 illustrates a planetary gear unit 20 according to an embodiment of the present invention. The planetary gear unit 20 comprises a housing 21 and a planet carrier 22. The housing 21 is rigidly connected to a nacelle of the wind turbine (not shown in the figures). The planet carrier 22 is, at the rotor side R, connected to a rotor hub of the wind turbine (also not shown in the figures) and serves as input shaft of the planetary gear unit 20. The planet carrier 22 comprises a plurality of planet shafts 23 distributed uniformly around the planet carrier's axis for supporting planet gears 24 in a rotatable manner by means of planet bearings 25. The planet bearings 25 are rolling bearings. The rolling bearings 25 for supporting the planet gears 24 may be any kind of rolling bearings as known by a person skilled in the art, such as for example but not limited to taper roller bearings, cylindrical roller bearings, spherical roller bearings or CARB toroidal roller bearings. The planet gears 24 are located between a sun gear 26 and a ring gear 27 for mutual interaction.

The planet carrier 22 is rotatably mounted in the housing 21 by means of sliding bearings 28 provided both at the rotor side R and the generator side G. As known by a person skilled in the art and as already described above, sliding bearings may also be referred to as friction bearings, slide bearings, plain bearings or journal bearings. According to embodiments of the invention, the sliding bearings are formed of one single sliding bearing material. This is different from classical, existing sliding bearings which are currently used when big bearings are needed because of high load and speed requirements of the wind turbine and which are formed of a basic design formed out of steel that is then provided with a sliding bearing material and which furthermore may comprise finishing materials. Some examples of material combinations of currently used sliding bearings are steel/bronze, steel/cast bronze alloys, steel/sintered bronze alloys, steel/aluminium-tin alloys, steel/copper-tin alloys, steel/bearing metal, steel/lead-bronze/electroplated layer. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways.

The sliding bearings 28 according to embodiments of the invention are cheaper than existing sliding bearings and are also cheaper than the rolling bearings that are currently used as planet carrier bearings in existing planetary gear units for gearboxes for wind turbines. This leads to a lower cost for manufacturing the planetary gear unit 20 according to embodiments of the invention.

The sliding bearings 28 and the planet carrier 22 have raceways for contacting each other. Raceways of the planet carrier 22 may, according to embodiments of the present invention, be hardened. The raceways may be hardened using any suitable technique known by a person skilled in the art, such as for example case hardening. According to other embodiments, the raceways of the planet carrier 22 may not be hardened but may instead be provided with a hardened ring. The raceways of the sliding bearings 28 and the raceways of the planet carrier 22 may be separated by lubricant, or in other words, a lubricant may be provided in between the raceways of the sliding bearings 28 and the raceways of the planet carrier 22.

The combination of sliding bearings 28 and rolling bearings 25 in a same planetary gear unit 20 is not straightforward as both types of bearings require different lubrication systems. Therefore, the lubricant system used with embodiments of the present invention could require a lubricant system that takes into account both the requirements for sliding bearings 28 and the requirements for rolling bearings 25, as are known by a person skilled in the art.

According to embodiments of the invention and as can be seen in Fig. 4, the sliding bearings 28 supporting the planet carrier 22 at the rotor side R may have a same shape as the sliding bearings 28 supporting the planet carrier 22 at the generator side G. According to other embodiments (see further), the sliding bearings 28 supporting the planet carrier 22 at the rotor side R may have a different shape as the sliding bearings 28 supporting the planet carrier 22 at the generator side G.

By rotatably supporting the planet carrier 22 by sliding bearings 28, cost of the planetary gear unit 20, and thus also of a gearbox and a wind turbine comprising such planetary gear units 20, can be significantly decreased. This is a big advantage nowadays as megawatt requirements for wind turbines, and consequently sizes of parts of, amongst others, the planetary gear unit 20 of the wind turbine, are continuously increasing.

The planetary gear unit 20 may furthermore comprise at least one of a radial fixation mechanism and/or at least one axial fixation mechanism. In the embodiment illustrated in Fig. 4, the planetary gear unit 20 comprises both a radial fixation mechanism 29 and an axial fixation mechanism 30. The radial fixation mechanism 29 for is for preventing the sliding bearings 28 from rotating during operation of the planetary gear unit 20. The radial fixation mechanism 29 may be provided at the rotor side R and/or at the generator side G of the planetary gear unit 20. In the present embodiment, the radial fixation mechanism 29 is provided at the rotor side R of the planetary gear unit 20. The radial fixation mechanism 29 is formed by an additional part which is different and separate from the sliding bearings 28, such a, for example, a pin 29. The radial fixation mechanism 29 may, according to embodiments of the invention, be provided at one of the rotor side R or the generator side G or, according to other embodiments and as is illustrated in Fig. 4, be provided at both the rotor side R and the generator side G of the planetary gear unit 20.

The planetary gear unit 20 may furthermore comprise an axial fixation mechanism 30 at the rotor side R and/or at the generator side G of the planetary gear unit 20. The presence of an axial fixation mechanism 30 prevents the sliding bearings 28 from moving in axial direction during operation of the planetary gear unit 20. In this embodiment, the axial fixation mechanism 30 is formed by an additional part which is different and separate from the sliding bearings 28, i.e. cover 30 provided between the housing 21 and the planet carrier 22 at the rotor side R. Further axial fixation is provided by the presence of a protrusion 22b of the planet carrier 22, also referred to as planet carrier protrusion 22b. Such planet carrier protrusion 22b may, as illustrated in Fig. 4, preferably be provided both at the rotor side R and the generator side G of the planetary gear unit 20. However, this is not necessarily so, planet carrier protrusions 22b may, according to other embodiments, be provided at only one of the rotor side R or the generator side G. According to other embodiments, the axial fixation mechanism 30 may also be formed as an integral part of the sliding bearings 28 (see further).

According to the present embodiment, a seal 31 may be provided in between the cover 30 and the planet carrier 22. The seal 31 is for substantially perfectly closing off the planetary gear unit 20 for, amongst others, preventing lubricant from leaking out of the planetary gear unit 20.

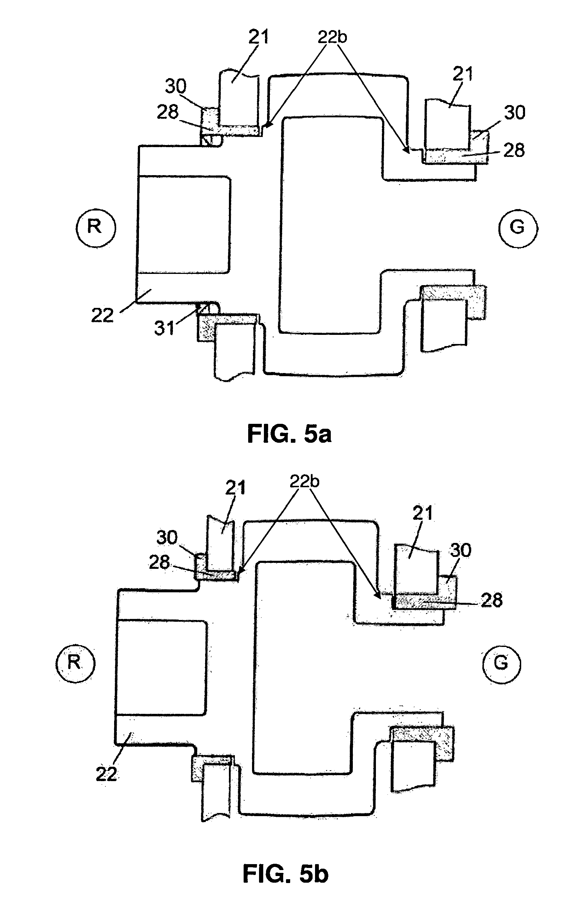

According to different embodiments of the invention, the sliding bearings 28 may have different shapes depending on the function or functions that they have to fulfill. Hereinafter, some different implementations of the sliding bearings 28 and of the planetary gear unit 20 according to the invention will be described. It has to be understood that these are only examples and are not intended to limit the invention in any way. In Fig. 5 to Fig. 8, for the ease of explanation, only part of the planetary gear unit 20 is shown. It has to be understood that this does not limit the invention in any way.

Fig. 5a and Fig. 5b illustrate another implementation of the planetary gear unit 20 of the invention. In this example, an axial fixation mechanism 30 is provided at both the rotor side R and the generator side G. However, instead of providing an additional part for preventing the planet bearings 28 from moving in axial direction during operation of the planetary gear unit 20 as was described with respect to Fig. 4, the axial fixation mechanism 30 is now formed as an integral part of the sliding bearings 28. The shape of the sliding bearings 28 is therefore different from the shape of the sliding bearings 28 in the embodiment of Fig. 4. In the present example, an axial fixation means is provided both at the rotor side R and the generator side G of the planetary gear unit 20. Again, further axial fixation is provided by the presence of planet carrier protrusions 22b both at the rotor side R and the generator side G of the planetary gear unit 20.

The planetary gear unit 20 according to the present embodiment may (see Fig. 5a) or may not (see Fig. 5b) comprise a seal 31. In the example given in Fig. 5a a seal 31 is provided in between the planet carrier 22 and the sliding bearing 28 at the rotor side R of the planetary gear unit 20.

Fig. 6 illustrates another embodiment of the planetary gear unit 20 according to the present invention. In this embodiment, the sliding bearings 28 again have a different shape than described with respect to Fig. 4 and Fig. 5. Similar as described with respect to Fig. 5, the planetary gear unit 20 according to the present embodiment comprises an axial fixation mechanism 30 which is formed as an integral part of the sliding bearings 28 at both the rotor side R and the generator side G of the planetary gear unit 20. According to embodiments of the invention but not shown in the figure, a seal 31 may furthermore be provided in between the sliding bearings 28 and the planet carrier 22.

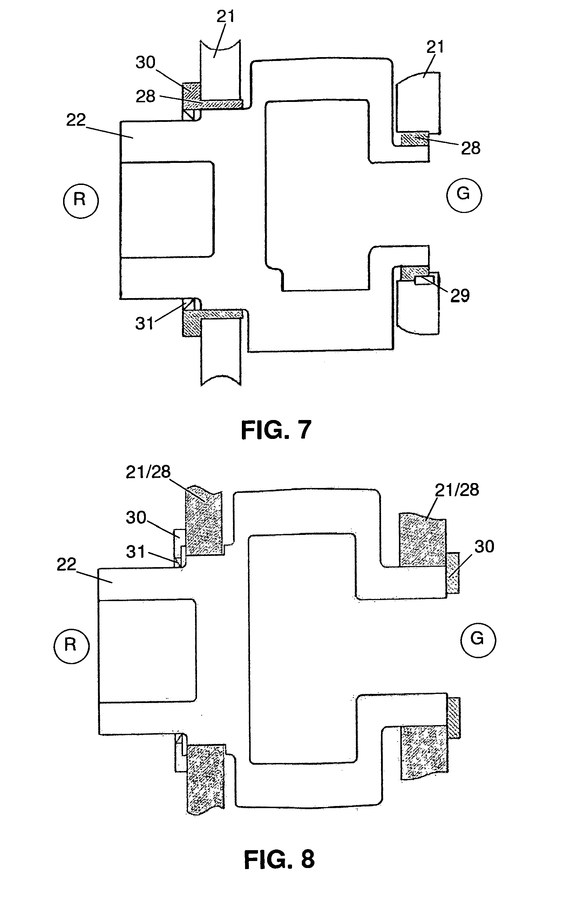

Another embodiment of the planetary gear unit 20 according to the invention is illustrated in Fig. 7. In the previous embodiments, the sliding bearings 28 provided at the rotor side R and the generator side R of the planetary gear unit 20 have a same shape. This is, however, not necessarily so. Fig. 7 illustrates an embodiment in which the sliding bearings 28 at the rotor side R have a different shape than the sliding bearings 28 at the generator side G of the planetary gear unit 20. The different shape of the sliding bearings 28 at rotor side R and generator side G originates from the fact that at the rotor side R an axial fixation mechanism 30 is provided which is formed as an integral part of the sliding bearings 28. The planetary gear unit 20 may furthermore comprise a radial fixation mechanism in the form of pin 29 at the generator side G. In the present example, a seal 31 may be provided in between the planet carrier 22 and the sliding bearing 28 at the rotor side R of the planetary gear unit 20.

Fig. 8 illustrates another embodiment of the planetary gear unit 20 according to the invention. In this example, the housing 21 and the sliding bearings 28 are formed of a same material and in one part. An axial fixation mechanism is provided as a separate part different from the sliding bearings 28, i.e. as a cover 30 provided in between the housing/bearing 21/28 and the planet carrier 22 at the rotor side R of the planetary gear unit 20. Furthermore, a seal 31 is provided in between the cover 30 and the planet carrier 22 at the rotor side R of the planetary gear unit 20. According to the present embodiment, an axial fixation mechanism 30 is also provided at the generator side G of the planetary gear unit 20. Similar as at the rotor side R of the planetary gear unit 20, the axial fixation mechanism is provided as a separate part different from the sliding bearings 28, i.e. as a cover 30..

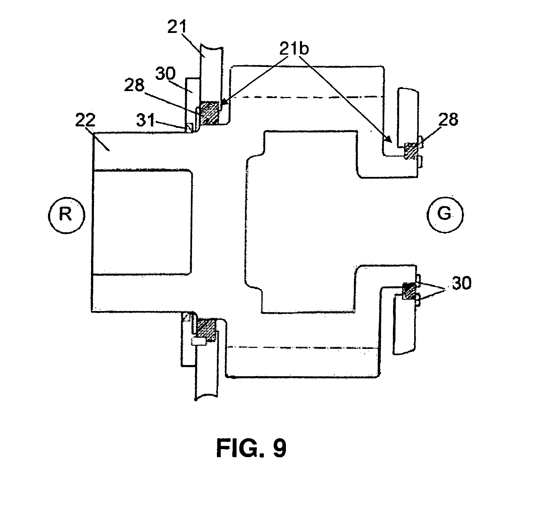

In Fig. 9 still another embodiment of the planetary gear unit 20 according to the invention is illustrated. The planetary gear unit 20 according to the present example comprises at the rotor side R an axial fixation mechanism in the form of a cover 30 for preventing the sliding bearing 28 from moving in the axial direction during operation of the planetary gear unit. Further axial fixation is provided by the presence of a protrusion 21 b of the housing 21, also referred to as housing protrusion 21 b. Such housing protrusion 21 b may, as illustrated in Fig. 9, preferably be provided both at the rotor side R and the generator side G of the planetary gear unit 20. However, this is not necessarily so, housing protrusions 21b may, according to other embodiments, be provided at only one of the rotor side R or the generator side G of the planetary gear unit 20.

A seal 31 is provided in between the cover 30 and the planet carrier 22. At the generator side G, the sliding bearing 28 is axially blocked by a further axial fixation mechanism 30.

It has to be understood that the above described embodiments are not intended to limit the invention in any way. Any suitable combination of sliding bearings, covers, sealing and axial and/or radial fixation mechanism, both at rotor side R and generator side G of the planetary gear unit 20 is intended to be disclosed in the invention.

The present invention thus teaches to use a combination of rolling bearings and sliding bearings in one planetary gear unit. By using, for supporting the planet carrier of the planetary gear unit, sliding bearings which are different from sliding bearings currently used as planet carrier bearings, in combination with rolling bearings at other locations in the planetary gear unit, manufacturing costs of a planetary gear unit according to embodiments of the invention can be significantly decreased.

According to embodiments of the invention, the planetary gear unit 20 according to embodiments of the invention may be applied to wind turbines whereby a rotor shaft of the wind turbine is bearing-mounted with two bearings which are fixed directly to the nacelle of the wind turbine. According to other embodiments of the invention, the planetary gear unit 20 according to embodiments of the invention may be applied to wind turbines whereby one of the bearings of the planet carrier of the planetary gear unit 20 also serves to support the rotor shaft of the wind turbine.

In a second aspect of the invention, a gearbox 40 is provided. The gearbox comprises at least one planetary gear unit 20 and a parallel gear unit 41.

The parallel gear unit 41 may comprise at least two parallel shafts. In other words, the parallel gear unit 41 may be a one-stage or a two-stage parallel gear unit. In the present example, which is not intended to limit the invention in any way, the parallel gear unit 41 may be a two-stage parallel gear unit comprising a high speed shaft 32, an intermediate shaft 33 and a low speed shaft 34 which are all parallel to each other and which are each rotatably supported by bearings 35. At least one of the shafts 32, 33, 34 may be supported by roller bearings. According to embodiments of the invention, each of the shafts 32, 33, 34 may be supported by roller bearings 35. According to other embodiments of the invention, one of the shafts, preferably the shaft provided with a gear with smallest diameter, may be supported by sliding bearings while the other shaft(s) may be supported by roller bearings. For example, the high speed shaft 32 of the parallel unit 41 may be supported by sliding bearings, while the intermediate shaft 33 and the low speed shaft 34 of the parallel gear unit 41 may be supported by roller bearings.

The parallel gear unit 41 furthermore comprises two gears 36, 37. One gear 36 is carried on the low speed shaft 34 and the intermediate shaft 33 and the other gear 37 is carried on the intermediate shaft 33 and the high speed shaft 34. The gears 36, 37 respectively mesh with pinion 38 on the intermediate shaft 33 and pinion 39 on the high speed shaft 32.

The planetary gear unit 20 may be any planetary gear unit 20 as described with respect to the first aspect of the invention. The planetary gear unit 20 comprises a housing 21 and a planet carrier 22 provided with planet shafts 23 distributed uniformly around a planet carrier's axis for rotatably supporting planet gears 24 which are mounted between a sun gear 26 and a ring gear 27 for mutual interaction and which are supported by rolling bearings 25. The planet carrier 22 is rotatably mounted in the housing 21 by means of sliding bearings 28 both at the rotor side R and the generator side G of the planetary gear unit 20.

According to embodiments of the invention, the sliding bearings 28 are formed of one single sliding bearing material. This is different from classical, existing sliding bearings which are currently used when big bearings are needed because of high load and speed requirements of the wind turbine and which are formed of a basic design formed out of steel that is then provided with a sliding bearing material and which furthermore comprises finishing materials. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways.

The sliding bearings 28 according to embodiments of the invention are cheaper than existing sliding bearings and are also cheaper than the rolling bearings that are currently used as planet carrier bearings in existing planetary gear units for gearboxes for wind turbines. This leads to a lower cost for manufacturing the planetary gear unit 20 according to embodiments of the invention.

The rolling bearings 25 for supporting the planet gears 24 may be any kind of rolling bearings as known by a person skilled in the art, such as for example but not limited to taper roller bearings, cylindrical roller bearings, spherical roller bearings or CARB toroidal roller bearings.

Fig. 9 illustrates an embodiment of a gearbox 40 according to the invention. In the example given in Fig. 9, the sliding bearings 28 provided at the rotor side R of the planetary gear unit 20 have a different shape than the sliding bearings 28 provided at the generator side G of the planetary gear unit 20. The different shape of the sliding bearings 28 at rotor side R and generator side G originates from the fact that at the rotor side R an axial fixation mechanism 30 is provided which is formed as an integral part of the sliding bearings 28 for preventing the sliding bearings 28 from moving in axial direction during operation of the planetary gear unit 20. According to other embodiments of the invention, the sliding bearings 28 provided at the rotor side R of the planetary gear unit 20 may have a same shape than the sliding bearings 28 provided at the generator side G of the planetary gear unit 20. According to other embodiments of the invention, the axial fixation mechanism 30 may also be provided as an additional part different from the sliding bearings 28, such as for example a cover.

A seal 31 is provided in between the planet carrier 22 and the sliding bearing 28 at the rotor side R of the planetary gear unit 20 for substantially perfectly closing off the planetary gear unit 20 for, amongst others, preventing lubricant from leaking out of the planetary gear unit 20.

The example given in Fig. 9 is not intended to limit the invention in any way. It has to be understood that a gearbox 40 according to embodiments of the invention may comprise any planetary gear unit 20 as described in the first aspect of this invention.

According to embodiments of the invention, the gearbox 40 according to embodiments of the invention may be applied to wind turbines whereby a rotor shaft of the wind turbine is bearing-mounted with two bearings which are fixed directly to the nacelle of the wind turbine. According to other embodiments of the invention, the gearbox 40 according to embodiments of the invention may be applied to wind turbines whereby one of the bearings of the planet carrier of the planetary gear unit 20 also serves to support the rotor shaft of the wind turbine.

In a further aspect of the invention, a wind turbine is provided. The wind turbine comprises a gearbox 40 comprising at least one planetary gear unit 20 and a parallel gear unit 41. The parallel gear unit 41 may be any parallel gear unit 41 as described above with respect to the second aspect of the invention. The planetary gear unit 20 comprises a housing 21 and a planet carrier 22 provided with planet shafts 23 distributed uniformly around a planet carrier's axis for rotatably supporting planet gears 24 which are mounted between a sun gear 26 and a ring gear 27 for mutual interaction and which are supported by rolling bearings 25. The planet carrier 22 is rotatably mounted in the housing 21 by means of sliding bearings 28 both at the rotor side R and the generator side G of the planetary gear unit 20.

According to embodiments of the invention, the sliding bearings are formed of one single sliding bearing material. This is different from classical, existing sliding bearings which are currently used when big bearings are needed because of high load and speed requirements of the wind turbine and which are formed of a basic design formed out of steel that is then provided with a sliding bearing material and which furthermore comprises finishing materials. The sliding bearing material used with the present invention may be any known material suitable for forming sliding bearings and currently used to provide on the steel basic design of classical existing sliding bearings, such as for example but not limited to bronze. Optionally, the sliding bearing may furthermore comprise an additional material on their raceways.

The sliding bearings 28 according to embodiments of the invention are cheaper than existing sliding bearings and are also cheaper than the rolling bearings that are currently used as planet carrier bearings in existing planetary gear units for gearboxes for wind turbines. This leads to a lower cost for manufacturing the planetary gear unit 20 according to embodiments of the invention.

The rolling bearings 25 for supporting the planet gears 24 may be any kind of rolling bearings as known by a person skilled in the art, such as for example but not limited to taper roller bearings, cylindrical roller bearings, spherical roller bearings or CARB toroidal roller bearings.

A wind turbine according to the invention may comprise any gearbox 40 as described with reference to the second aspect of this invention. The gearbox 40 may comprise any planetary gear unit 20 as described in the first aspect of this invention.

According to embodiments of the invention, the wind turbine may be of the kind whereby a rotor shaft of the wind turbine is bearing-mounted with two bearings which are fixed directly to the nacelle of the wind turbine. According to other embodiments of the invention, the wind turbine may be of the kind whereby one of the bearings of the planet carrier of the planetary gear unit 20 also serves to support the rotor shaft of the wind turbine.

## Claims

1. A planetary gear unit (20) for a gearbox (40) for a wind turbine, the planetary gear unit (20) comprising:
- a housing (21), and
- a planet carrier (22) provided with planet shafts (23) distributed uniformly around a planet carrier's axis for rotatably supporting planet gears (24) which are mounted between a sun gear (26) and a ring gear (27) for mutual interaction and which are supported by rolling bearings (25),
**characterized in that** the planet carrier (22) is rotatably mounted in the housing (21) by means of sliding bearings (28).

2. A planetary gear unit (20) according to claim 1, wherein the sliding bearings (28) are formed of a single material.

3. A planetary gear unit (20) according to claim 2, wherein the sliding bearings (28) are formed of bronze.

4. A planetary gear unit (20) according to claim 2 or 3, the sliding bearings (28) having raceways, wherein the sliding bearings (28) furthermore comprise an additional material on their raceway.

5. A planetary gear unit (20) according to any of the previous claims, the sliding bearings (28) and the planet carrier (22) having raceways for contacting each other, wherein the raceways of the planet carrier (22) are hardened.

6. A planetary gear unit (20) according to any of claims 1 to 4, the sliding bearings (28) and the planet carrier (22) having raceways for contacting each other, wherein the raceways of the planet carrier (22) are provided with a hardened ring.

7. A planetary gear unit (20) according to any of the previous claims, furthermore comprising at least one axial fixation mechanism (22b, 30) at a rotor side (R) of the planetary gear unit (20) and/or at a generator side (G) of the planetary gear unit (20) for preventing the sliding bearings (28) from moving in axial direction.

8. A planetary gear unit (20) according to claim 7, wherein the axial fixation mechanism (22b, 30) is formed as an integral part of the sliding bearing (28).

9. A planetary gear unit (20) according to claim 7, wherein the axial fixation mechanism (22b, 30) is formed by an additional part different from the sliding bearing (28).

10. A planetary gear unit (20) according to claim 9, wherein the axial fixation mechanism (30) comprises a cover (30) which is provided between the housing (21) and the planet carrier (22).

11. A planetary gear unit (20) according to any of the previous claims, furthermore comprising at least one radial fixation mechanism (29) at a rotor side (R) of the planetary gear unit (20) and/or at a generator side (G) of the planetary gear unit (20) for preventing the sliding bearings (28) from rotating.

12. A planetary gear unit (20) according to any of the previous claims, furthermore comprising a seal (31).

13. A planetary gear unit (20) according to any of the previous claims, wherein the housing (21) and the sliding bearings (28) are formed of a same material and in one part.

14. A gearbox (30) for a wind turbine, the gearbox (30) comprising at least one planetary gear unit (20) according to any of the previous claims and a parallel gear unit (31).

15. A wind turbine comprising a gearbox (30) according to claim 14.
